(19) Europäisches Patentamt
European Patent Office
Office européen des brevets

(11) **EP 4 277 155 A1**

(12) **EUROPÄISCHE PATENTANMELDUNG**

(43) Veröffentlichungstag:
**15.11.2023 Patentblatt 2023/46**

(21) Anmeldenummer: **23171733.1**

(22) Anmeldetag: **04.05.2023**

(51) Internationale Patentklassifikation (IPC):
**H04B 7/08** (2006.01)    **H04B 1/00** (2006.01)
**H04B 1/16** (2006.01)

(52) Gemeinsame Patentklassifikation (CPC):
**H04B 7/0885; H04B 1/0003; H04B 1/16**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **09.05.2022 DE 102022111541**

(71) Anmelder: **Diehl Metering Systems GmbH**
**90451 Nürnberg (DE)**

(72) Erfinder:
- **Petkov, Hristo**
  **90411 Nürnberg (DE)**
- **Weiss, Karolin**
  **90459 Nürnberg (DE)**
- **Kauppert, Thomas**
  **90455 Nürnberg (DE)**

(74) Vertreter: **Diehl Patentabteilung**
**c/o Diehl Stiftung & Co. KG**
**Stephanstraße 49**
**90478 Nürnberg (DE)**

(54) **FUNKKNOTEN SOWIE KOMMUNIKATIONSSYSTEM**

(57) Funkknoten für den Einsatz, insbesondere in einer energieautarken, vorzugsweise in einer langzeitenergieautarken Umgebung, wobei der Funkknoten Daten in Form mindestens eines Datenpakets oder eines Teils davon mit einer bestimmten Datenrate empfängt und zur Datenweiterverarbeitung bereitstellt, wobei der Funkknoten mindestens zwei Receiver, die jeweils als integrierter Schaltkreis ausgebildet, insbesondere als eigenständiger integrierter Schaltkreis, jedoch zueinander parallelgeschaltet sind, umfasst, wobei jeder Receiver in der Lage ist, die Daten in Form mindestens eines Datenpakets oder eines Teils davon mit einer bestimmten Datenrate zu empfangen und zu einer ersten Datenweiterverarbeitung bereitzustellen, die zu der ersten Datenweiterverarbeitung bereitgestellten Daten der mindestens zwei Receiver kombiniert werden, und die kombinierten Daten für eine zweite Datenweiterverarbeitung, insbesondere eine Synchronisation oder eine Decodierung oder eine Demodulation, bereitgehalten werden.

Fig. 5

EP 4 277 155 A1

**Beschreibung**

Die vorliegende Erfindung betrifft einen Funkknoten gemäß dem Oberbegriff des Anspruchs 1 sowie ein Kommunikationssystem gemäß dem Oberbegriff des Anspruchs 17.

Technologischer Hintergrund sowie Ausgangssituation

Die vorliegend interessierenden Funkknoten des Software Defined Radio (SDR)-Typs enthalten in der Regel einen Sender, Empfänger oder Transceiver, wie z. B. einen Funkchip, und werden vor allem an batteriebetriebenen stationären Endgeräten oder Datensammlern mit uni- oder bidirektionaler Datenübertragung verwendet. Bei den Endgeräten kann es sich um Sensor- und/oder Aktor-anordnungen handeln. Bei den zu empfangenden und/oder zu sendenden Daten handelt es sich beispielsweise um Daten zum Betrieb des Funkknotens und/oder des Endgerätes und/oder des Datensammlers, wie z. B. Aktualisierungsdaten, Programmdaten, Steuerdaten, Verbrauchsdaten oder dergleichen, die von dem Funkknoten im Downlink empfangen und/oder im Uplink gesendet werden.

Die Daten bzw. Datentelegramme werden hierbei vorzugsweise nicht am Stück, sondern gestückelt in Form von einzelnen Datenpaketen oder Teildatenpaketen gesendet, vom Funkknoten empfangen und im Funkknoten wieder zusammengefügt bzw. rekombiniert (sog. Recombining). Insbesondere wird hierbei aus den Daten eine Mehrzahl von kanalcodierten Datenpaketen erzeugt, wobei insbesondere jedes der kanalcodierten Datenpakete Paketkerndaten entsprechend einer für jedes Datenpaket unterschiedlichen Paketkennung aufweist. Insbesondere die Paketkerndaten sind mit einem Kanalcode höherer Redundanz codiert als die Nutzdaten.

Der Datenempfang am Funkknoten hängt von der Empfangsempfindlichkeit desselben ab. Sollte die Signalleistung der Funksignale oder der daraus abgeleiteten Signale am Eingang des Funkknotens unterhalb der Empfangsempfindlichkeit liegen, ist kein Empfang möglich. Dadurch können Funksignale oder daraus abgeleitete Signale mit einer geringen Signalleistung, z. B. Funksignale von weiter entfernten Funkknoten, nicht mehr empfangen werden. Es besteht daher ein allgemeines Bestreben, die Empfangsempfindlichkeit von Funkknoten zu erhöhen.

Nächstliegender Stand der Technik

Die DE 10 2018 003 106 A1 offenbart einen Funkempfänger mit einer Empfangseinrichtung des SDR-Typs, welche Daten mit einer bestimmten Datenrate empfängt und zur Datenweiterverarbeitung bereitstellt. Hierbei werden die Daten an der Empfangseinrichtung abgezweigt und einem Mikrocontroller zugeführt, welcher die Daten dezimiert, in einem Speicher zwischenspeichert und für eine Weiterverarbeitung bereitstellt.

Aufgabe der vorliegenden Erfindung

Aufgabe der vorliegenden Erfindung ist es, einen Funkknoten mit verbesserter Empfangsempfindlichkeit sowie ein mindestens einen entsprechenden Funkknoten umfassendes Kommunikationssystem zur Verfügung zu stellen.

Lösung der Aufgabe

Die vorstehende Aufgabe wird durch einen Funkknoten gemäß Anspruch 1 sowie durch ein Kommunikationssystem nach Anspruch 20 gelöst. Zweckmäßige Ausgestaltungen des erfindungsgemäßen Funkknotens sowie des Kommunikationssystems werden in den Unteransprüchen beansprucht.

Erfindungsgemäß umfasst der Funkempfänger mindestens zwei, vorzugsweise im Wesentlichen gleich aufgebaute, Receiver ("Frontends"), vorzugsweise Transceiver, die jeweils als integrierter Schaltkreis, insbesondere als eigenständiger integrierter Schaltkreis, insbesondere als System-on-a-Chip (SoC), ausgebildet, jedoch zueinander parallelgeschaltet sind, wobei jeder Receiver in der Lage ist, die Daten in Form mindestens eines Datenpakets oder eines Teils davon (z. B. ein Teildatenpaket) mit einer bestimmten Datenrate zu empfangen und zu einer ersten Datenweiterverarbeitung bereitzustellen, wobei die zu der ersten Datenweiterverarbeitung bereitgestellten Daten der mindestens zwei Receiver kombiniert bzw. addiert werden und die kombinierten bzw. addierten Daten anschließend für eine zweite Datenweiterverarbeitung, insbesondere eine Synchronisation oder eine Decodierung oder eine Demodulation, bereitgehalten werden. Hierbei werden von den Receivern dieselben Daten per Funksignal empfangen und getrennt bzw. unabhängig voneinander verarbeitet. Die Receiver erzeugen hierbei aufgrund ihrer Hardware, der Signal- bzw. Datenverarbeitung und durch zufällige Störungen im Übertragungskanal ein weißes Rauschen. Die zur Weiterverarbeitung von den Receivern bereitgestellten Daten stehen vorzugsweise in Korrelation zueinander, sodass sich diese konstruktiv kombinieren bzw. addieren lassen. Hierdurch erhöht sich die Signalstärke der Daten. Das weiße Rauschen der jeweiligen Receiver hingegen steht nicht in Korrelation zueinander, sodass es bei der Kombination bzw. Addition im Wesentlichen nicht erhöht wird. Es erhöht sich somit nur die Signalstärke der Daten bzw. das Signal-Rausch-Verhältnis, wodurch die

Empfangsempfindlichkeit P$_r$ des Funkknotens gesteigert werden kann. Hierdurch kann die Empfangsreichweite des Funknotens erhöht werden, sodass auch Funksignale mit einer geringeren Signalstärke, z. B. von weiter entfernten Sendern, noch empfangen werden können. Insbesondere lässt sich die Empfangsempfindlichkeit P$_r$ des Funkknotens mit der Anzahl der Receiver linear skalieren. So erhält man beispielsweise für zwei Receiver einen Gewinn von in etwa 3 dB und für beispielsweise zehn Receiver einen Gewinn von in etwa 10 dB.

Zweckmäßigerweise kann jeweils für die mindestens zwei Receiver ein gemeinsamer Oszillator, d. h. Quarz bzw. Taktgeber, und/oder eine gemeinsame PLL (Phasenregelschleife) und/oder ein gemeinsamer Mikrocontroller vorgesehen sein. Durch den gemeinsamen Oszillator kann sichergestellt werden, dass die Empfangsträgerfrequenz der Receiver im Wesentlichen identisch ist. Die gemeinsame PLL generiert anhand der Taktung des Oszillators die Empfangsträgerfrequenz und passt die Signalfrequenz der parallelen Empfangssignale an diese an. Durch den gemeinsamen Mikrocontroller können die zur Weiterverarbeitung bereitgestellten Daten der mindestens zwei Receiver kombiniert werden.

Alternativ oder zusätzlich kann für jeden Receiver eine eigene, z. B. interne, PLL vorgesehen sein, welche von dem gemeinsamen Oszillator die Taktung erhält.

Vorzugsweise können der gemeinsame Oszillator und/oder die gemeinsame PLL und/oder der gemeinsame Mikrocontroller als zusätzliche Bauelemente neben den mindestens zwei, z. B. als SoC ausgebildeten, Receivern an dem Funkknoten, z. B. auf einer Leiterplatte des Funkknotens, vorgesehen sein. Vorzugsweise sind hierbei die internen Oszillatoren und/oder PLLs der Receiver deaktiviert.

Vorteilhafterweise kann jeder der mindestens zwei Receiver die Daten, insbesondere die zur ersten Datenweiterverarbeitung bereitgestellten Daten, vorzugsweise über je eine Schalteinrichtung, z. B. aus einem Verarbeitungszweig, abzweigen und dezimieren, indem ein Teil aus der Samplemenge ausgewählt wird. Hierdurch können die abgezweigten Daten für weitere Verarbeitungsschritte, wie z. B. einer Rekombination, bereitgehalten werden. Hierbei können die Daten insbesondere durch eine Schalteinrichtung abgezweigt werden.

Zweckmäßigerweise umfasst jeder der mindestens zwei Receiver einen Mikrocontroller, dem die jeweils abgezweigten Daten zugeleitet werden. Der Mikrocontroller kann die abgezweigten Daten verarbeiten und zur Weiterverarbeitung bereitstellen.

Dadurch, dass Gruppenlaufzeit und/oder Phase der abgezweigten Daten der mindestens zwei Receiver geschätzt oder ermittelt und/oder die Gruppenlaufzeit und/oder Phase einander angeglichen oder angepasst werden, kann gewährleistet werden, dass die Phase und/oder Gruppenlaufzeit der jeweils abgezweigten Daten, zumindest im Wesentlichen, nicht gegeneinander verschoben sind. Hierdurch kann insbesondere eine konstruktive Kombination bzw. Addition der Daten erfolgreich durchgeführt werden. Beispielsweise findet die Angleichung oder Anpassung der Gruppenlaufzeit und/oder der Phase auf den jeweiligen Mikrocontrollern der Transceiver statt. Die geschätzte oder ermittelte Gruppenlaufzeit und/oder Phase wird vorzugsweise für eine Weiterverarbeitung, z. B. der kombinierten Daten, bereitgestellt.

Zweckmäßigerweise wird ein Gruppenlaufzeitunterschied und/oder eine Phasenverschiebung zwischen den von den mindestens zwei Receivern abgezweigten Daten geschätzt oder ermittelt und für das Kombinieren bzw. Addieren der bereitgestellten Daten verwendet wird. Hierdurch kann insbesondere eine konstruktive Kombination bzw. Addition der Daten erfolgreich durchgeführt werden.

Vorteilhafterweise kann die Schätzung oder Ermittlung der Gruppenlaufzeit und/oder Phase und/oder des Gruppenlaufzeitunterschieds und/oder der Phasenverschiebung mittels eines Brute-Force-Verfahrens oder mittels mindestens einem im Vergleich zu den Funksignalen weiterer Funkknoten energiereicheren Funksignal oder mittels einer Bestimmung der Phasendifferenz der von dem Receiver abgezweigten Daten erfolgen. Dies kann beispielsweise einmal pro Empfangsfenster, in vorher festgelegten festen zeitlichen Abständen oder bei jedem Burst bzw. Funkimpuls vorgenommen werden. Hierfür kann zweckmäßigerweise auch zuerst die Gruppenlaufzeit und/oder die Phase der jeweils abgezweigten Daten der mindestens zwei Receiver ermittelt werden und der Gruppenlaufzeitunterschied und/oder die Phasenverschiebung daraus bestimmt werden. Zweckmäßigerweise findet die Schätzung oder Ermittlung des Gruppenlaufzeitunterschieds und/oder der Phasenverschiebung auf den jeweiligen Mikrocontrollern der Receiver statt.

Mittels des Brute-Force-Verfahrens gemäß der ersten Alternative werden mögliche Gruppenlaufzeiten und/oder Phasen und/oder Phasenverschiebungen und/oder Gruppenlaufzeitunterschiede so lange getestet, bis aus einer vorgegebenen Menge von Werten die richtigen Werte geschätzt bzw. ermittelt worden sind. Hierbei werden vorzugsweise zuerst Kalibrierungswerte gesucht. Da die Hardware der Receiver bekannt ist, ist der mögliche Bereich des Gruppenlaufzeitunterschieds und/oder der Phasenverschiebung bekannt. Zweckmäßigerweise wird hierfür eine Überabtastung der abgezweigten Daten vorgenommen und hierbei die abgezweigten Daten jeweils um ein Sample verschoben, bis die Gruppenlaufzeiten im Wesentlichen übereinstimmen. Bei der Schätzung oder Ermittlung der Phasenverschiebung wird die Phase der Daten solange um einen bestimmten Winkel verschoben, bis diese im Wesentlichen übereinstimmen. Es kann ausreichend sein, das Brute-Force-Verfahren nur einmal pro Empfangsfenster durchzuführen.

Bei der Schätzung bzw. Ermittlung der Gruppenlaufzeit und/oder der Phase und/ oder des Gruppenlaufzeitunterschieds und/oder der Phasenverschiebung gemäß der zweiten Alternative mittels mindestens einem energiereicheren Funksignal bzw. der Daten des energiereicheren Funksignals, werden insbesondere die Signale bzw. Daten von nahegelegenen Funksendern ausgewertet. Der nahegelegene Funksender befindet sich hierbei vorzugsweise in dem Funksystem des Funkknotens. Hierdurch kann der Funkknoten bezüglich Gruppenlaufzeitunterschied und/oder Phasenverschiebung kalibriert werden, wodurch auch Funksignale bzw. Daten von entfernteren Funksender empfangen werden können.

Gemäß der dritten Alternative werden bzw. wird die Gruppenlaufzeit und/oder die Phase und/oder der Gruppenlaufzeitunterschied und/oder die Phasenverschiebung durch eine Bestimmung der Phasendifferenz geschätzt bzw. ermittelt. Hierbei wird auf jedem der mindestens zwei Receiver die Phasendifferenz zwischen einem Sample der abgezweigten Daten mit einem vorherigen Sample der abgezweigten Daten gebildet. Hierbei kann es sich um zwei direkt aufeinanderfolgende Samples handeln. Alternativ kann man die Phasendifferenz zwischen zwei Samples bilden, die N Samples, z. B. 4 oder 5 Samples, auseinanderliegen. Aufgrund dessen kann vorzugsweise die Phasenverschiebung und/oder die Trägerfrequenzverschiebung zwischen den von den mindestens zwei Receivern abgezweigten Daten vernachlässigt werden. Anschließen werden die Phasendifferenzen der Receiver korreliert. Bei hohen Signal-Rausch-Verhältnissen (SNRs) ergeben sich Maximalwerte (Peaks), aus denen der Gruppenlaufzeitunterschied ermittelt werden kann. Wenn keine Maximalwerte ermittelt werden können, wird die Phasendifferenz des einen Receivers auf den anderen Receiver kopiert, die Daten des einen Receivers um eine Hypothesenverschiebung verschoben und anschließend die Phasendifferenzen addiert. Anschließend wird die Phasendifferenz korreliert und eine Maximalwertsuche durchgeführt. Wird ein Maximalwert gefunden, stellt die Hypothesenverschiebung den Gruppenlaufzeitunterschied dar. Das Verfahren wird solange widerholt, bis ein Maximalwert gefunden wird. Die Verschiebung, bei der sich der Peak ergeben hat, entspricht dem Gruppenlaufzeitunterschied.

Indem der Gruppenlaufzeitunterschied und/oder die Phasenverschiebung gespeichert werden bzw. wird, kann der Gruppenlaufzeitunterschied und/oder die Phasenverschiebung für einen Empfang weiterer Daten in demselben Empfangsfenster oder in einem anderen Empfangsfenster verwendet werden.

Zweckmäßigerweise kann die Angleichung oder Anpassung der Gruppenlaufzeit und/oder der Phase auf Basis des geschätzten oder ermittelten Gruppenlaufzeitunterschieds und/oder auf Basis der geschätzten oder ermittelten Phasenverschiebung und/oder auf Basis der zu den jeweiligen Receivern zugehörenden von der PLL verwendeten Startphase erfolgen. Hierbei wird die Gruppenlaufzeit und/oder die Phase der abgezweigten Daten der einzelnen Receiver mit den zuvor ermittelten Werten aneinander angeglichen oder angepasst, sodass diese im Wesentlichen übereinstimmen und eine, z. B. konstruktive, Kombination bzw. Addition erfolgen kann. Zweckmäßigerweise übermittelt die PLL hierfür die verwendete Startphase an mindestens einen der Mikrocontroller. Alternativ oder zusätzlich kann die Angleichung oder Anpassung der Gruppenlaufzeit beispielsweise mittels eines Timers erfolgen. Der Timer kann auf Basis des geschätzten oder ermittelten Gruppenlaufzeitunterschieds justiert werden, wodurch die empfangenen Daten entsprechend verschoben werden. Hierdurch wird ein aufwendiges Resampling der Daten durch die mindestens zwei Receiver vermieden.

Beispielsweise kann die Kombination der abgezweigten Daten auf dem Mikrocontroller des Funkknotens oder auf einem Mikrocontroller der mindestens zwei Receiver durchgeführt werden.

Vorzugsweise können die abgezweigten Daten vor oder nach der Kombination synchronisiert werden. Hierbei wird der Zeitpunkt bestimmt, wann die Daten an den Receivern angekommen sind bzw. von diesen empfangen wurden. Zweckmäßigerweise wird die Synchronisation auf dem Mikrocontroller des Funkknotens oder auf den Mikrocontrollern der mindestens zwei Receivern durchgeführt.

Vorteilhafterweise können von den abgezweigten Daten des ersten der mindestens zwei Receiver lediglich ein Teil und von den abgezweigten Daten des zweiten der mindestens zwei Receiver lediglich ein Teil ausgewählt und für eine Kombination bereitgestellt werden. Hierbei kann die Rechenzeit reduziert werden, da die Mikrocontroller der Receiver jeweils nur einen Teil der Daten verarbeiten. Hierdurch können die Daten in den Mikrocontrollern schneller bearbeitet werden. Zudem können die Receiver für unterschiedliche Frequenz und/oder Zeitbereiche genutzt werden.

Dadurch, dass die Auswahl des jeweiligen Teils derart erfolgen kann, dass sich die Teile der abgezweigten Daten der mindestens zwei Receiver in Bezug auf die Daten in Form mindestens eines Datenpakets oder eines Teils davon (z. B. ein Teildatenpaket) mit einer bestimmten Datenrate ergänzen, können die Daten durch die Kombination in einfacher Weise rekonstruiert werden.

Zweckmäßigerweise kann der erste der mindestens zwei Receiver einen ersten Frequenzbereich und/oder einen ersten Zeitbereich der abgezweigten Daten des ersten Receivers und der zweite der mindestens zwei Receiver einen zweiten Frequenzbereich und/oder einen zweiten Zeitbereich der abgezweigten Daten des zweiten Receivers auswählen und für eine Kombination bereitstellen, wobei insbesondere der erste und der zweite Frequenzbereich und/oder Zeitbereich aneinander angrenzen oder sich zumindest in einem Teilbereich überlappen können. Hierdurch können verschiedene Frequenz- und/oder Zeitbereiche gleichzeitig empfangen und verarbeitet werden, wodurch die Rechenzeit reduziert werden kann.

Zweckmäßigerweise kann der Funkknoten zur Selbstkalibrierung Daten aussenden, die von den mindestens zwei Receivern empfangen werden. Hierbei kann der Gruppenlaufzeitunterschied und/oder die Phasenverschiebung zwischen den beiden Receivern vorab ermittelt werden. Zweckmäßigerweise ist hierfür am Funcknoten ein zusätzlicher Sender vorgesehen.

Dadurch, dass eine zusätzliche Oszillatoreinrichtung, insbesondere ein LF-Oszillator, vorzugsweise für die mindestens zwei Receiver gemeinsam, vorgesehen sein kann, können die Receiver zeitlich angesteuert werden und z. B. aus einem Ruhezustand "aufgeweckt" werden. Dies ermöglicht es, dass die Mikrocontroller zwischen verschiedenen Empfangsfenstern in einen Ruhemodus wechseln können, sodass der Energieverbrauch des Funknotens reduziert werden kann. Die zusätzliche Oszillatoreinrichtung kann die Receiver oder die jeweiligen Mikrocontroller aus dem jeweiligen Ruhezustand "wecken", wenn ein Empfangsfenster beginnen sollte.

Vorteilhafterweise kann es sich bei den Daten, welche beispielsweise mittels eines Telegram-Splitting-Verfahrens in mehreren Frames (Blöcken) über unterschiedliche Frequenzkanäle übertragen werden, um Daten aus einem Core Frame und/ oder aus mindestens einem Extension Frame handeln. Zweckmäßigerweise sind der Core Frame und der mindestens eine Extension Frame und/oder die Extension Frames untereinander zeitlich, z. B. 150 ms, voneinander beanstandet. Hierdurch können die Daten über lange Distanzen energieeffizient und zuverlässig übertragen werden.

Vorteilhafterweise kann die zweite Datenweiterverarbeitung oder die Synchronisation der abgezweigten Daten kohärent oder inkohärent erfolgen. Bei einer kohärenten zweiten Datenweiterverarbeitung oder Synchronisation können die Daten ohne Vorverarbeitung verarbeitet werden. Bei einer inkohärenten zweiten Datenweiterverarbeitung oder Synchronisation ist die Phasenverschiebung zwischen den mindestens zwei Receivern nicht relevant, sodass insbesondere eine, z. B. nicht lineare, Vorverarbeitung der Daten durchgeführt werden kann.

Vorzugsweise handelt es sich bei den Daten um I/Q-Daten, welche nach dem Empfang in den jeweiligen Receivern mittels des I/Q-Verfahrens (In-Phase/Quadrature-Verfahren) bearbeitet und/oder digitalisiert werden. Dies kann beispielsweise dadurch erfolgen, dass das analoge Eingangssignal in zwei Signalwege aufgeteilt wird, wobei das Signal auf einem Signalweg mit der originalen Phasenlage eines Referenzsignals (I-Phase) und das Signal auf dem anderen Signalweg mit einer um 90° phasenverschobenen Referenzfrequenz (Q-Daten) erzeugt wird.

Zweckmäßigerweise kann der Funknoten in einem Datensammler oder in einem Endgerät vorgesehen sein, wobei der Datensammler oder das Endgerät vorzugsweise batteriebetrieben, insbesondere langzeitbatteriebetrieben, ist. Beispielsweise umfasst der Datensammler oder das Endgerät hierfür eine nicht wiederaufladbare Batterie, insbesondere ein LongLife-Batterie mit einer Lebensdauer größer als zehn Jahre. Bei dem Endgerät handelt es sich beispielsweise um ein Verbrauchsmessgerät, wie z. B. ein Gas-, Wasser-, Wärmemengen- oder Energiezähler, eine Sensoreinheit, wie z. B. ein Füllstandsensor oder eine Temperaturmesseinrichtung, oder einen anderen Sensorknoten z. B. einer IoT (Internet of Things)-Anwendung.

Insbesondere kann der Funknoten nach Art eines Gateways ausgebildet sein und die Daten an andere Funkknoten weiterleiten.

Die vorliegende Erfindung betrifft darüber hinaus ein Kommunikationssystem gemäß dem Oberbegriff des Anspruchs 17. Erfindungsgemäß umfasst das Kommunikationssystem mehrere Funkknoten zum Übertragen von Daten, wobei als Funcknoten ein Funkknoten nach einem der Ansprüche 1 bis 16 vorgesehen ist.

Zweckmäßigerweise kann der Funkknoten in den lizenzfreien ISM-Bändern, vorzugsweise in einem Frequenzband im Bereich von 865,0 - 868,0 MHz oder 868,0 - 868,6 MHz oder 869,4 - 869,65 MHz oder 902 - 928 MHz, betrieben werden.

Zweckmäßigerweise arbeitet der Funkknoten schmalbandig, d.h. die Signalbandbreite des Funkknotens ist kleiner als 20 kHz.

Vorteilhafterweise kann der Funkknoten mit einer Symbolrate zwischen 2360 Symbole/s und 2400 Symbole/s, vorzugsweise mit einer Symbolrate von 2380,371 Symbole/s, arbeiten.

Vorzugsweise können die Daten mit einer kodierten Datenrate kleiner als 100 kbit/s, vorzugsweise kleiner als 50 kbit/s, besonders bevorzugt kleiner als 15 kbit/s, ganz besonders bevorzugt kleiner als 1 kbit/s, und/oder mit einer unkodierten Datenrate kleiner als 35 kbit/s, vorzugsweise kleiner als 15 kbit/s, besonders bevorzugt kleiner als 5 kbit/s, ganz besonders bevorzugt kleiner als 1 kbit/s verarbeitet werden.

Insbesondere kann die Funksignalstärke der dem Funkknoten nahegelegenen Funksendern des Funksystems des Funkknotens so groß sein, dass die Daten auch ohne Kombination bzw. Addition derselben am Funkknoten empfangen werden können. Hierdurch kann es ausreichend sein, dass nur einer der mindestens zwei Receiver des Funknotens aktiv ist und sich die restlichen Receiver des Funcknotens in einem Ruhezustand befinden. Infolgedessen kann Energie eingespart werden.

Vorzugsweise werden solche Receiver oder Frontends verwendet, deren maximaler Stromverbrauch 10 mA nicht übersteigt.

Beispielsweise können die Daten nach der Kombination gespeichert und/oder einem Decoder zugeführt werden.

Beschreibung der Erfindung anhand von Ausführungsbeispielen

Zweckmäßige Ausgestaltungen des erfindungsgemäßen Funkknotens sowie des Kommunikationssystems werden anhand von Zeichnungsfiguren nachstehend näher erläutert. Wiederkehrende Merkmale sind der Übersichtlichkeit halber lediglich mit einem Bezugszeichen versehen. Es zeigen:

Fig. 1 eine vereinfachte schematische Darstellung eines Kommunikationssystems bestehend aus mehreren Endgeräten und einem Datensammler;

Fig. 2 eine vereinfachte schematische Darstellung von Daten, die in Form mehrerer Datenpakete gesendet werden;

Fig. 3 ein Beispiel eines Rauschleistung/Temperatur-Diagramms zur Darstellung der Rauschleistung in Abhängigkeit der Temperatur;

Fig. 4a ein Beispiel eines Histogramms von RSSI-Werten zur Darstellung der Anzahl der Knoten über die Leistung;

Fig. 4b eine vereinfachte beispielhafte Darstellung des Kommunikationssystems mit mehreren Endgeräten und einem Datensammler;

Fig. 5 eine vereinfachte schematische Darstellung eines ersten Ausführungsbeispiels des erfindungsgemäßen Funkknotens;

Fig. 6 eine vereinfachte schematische Darstellung eines zweiten Ausführungsbeispiels des erfindungsgemäßen Funkknotens;

Fig. 7 eine vereinfachte schematische Darstellung eines dritten Ausführungsbeispiels des erfindungsgemäßen Funkknotens;

Fig. 8 eine vereinfachte schematische Darstellung eines vierten Ausführungsbeispiels des erfindungsgemäßen Funkknotens;

Fig. 9 eine vereinfachte schematische Darstellung eines fünften Ausführungsbeispiels des erfindungsgemäßen Funkknotens;

Fig. 10 eine vereinfachte schematische Darstellung eines sechsten Ausführungsbeispiels des erfindungsgemäßen Funkknotens;

Fig. 11 eine vereinfachte schematische Darstellung eines siebten Ausführungsbeispiels des erfindungsgemäßen Funkknotens;

Fig. 12 eine vereinfachte schematische Darstellung eines achten Ausführungsbeispiels des erfindungsgemäßen Funkknotens;

Fig. 13 ein beispielhaftes Flussdiagramm zur Schätzung oder Ermittlung eines Gruppenlaufzeitunterschieds und/oder einer Phasenverschiebung mittels eines Brute-Force-Verfahrens sowie

Fig. 14 ein beispielhaftes Flussdiagramm zur Schätzung oder Ermittlung eines Gruppenlaufzeitunterschieds.

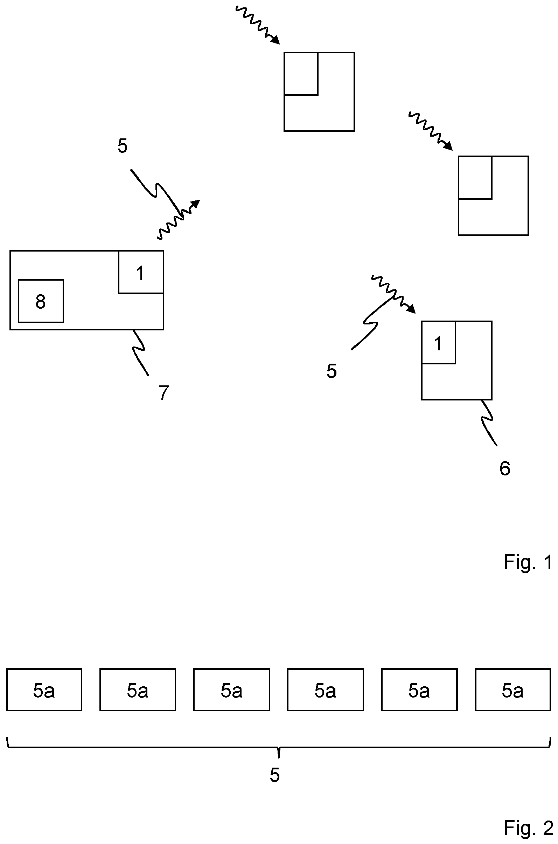

Fig. 1 zeigt ein erfindungsgemäßes Kommunikationssystem, bei welchem mehrere Endgeräte 6 mit jeweils einem integrierten erfindungsgemäßen Funkknoten 1 mit einem Funkknoten 1 eines Datensammlers 7 über Funk kommunizieren. Bei den Endgeräten 6 kann es sich beispielsweise um Verbrauchsmessgeräte, wie z. B. Gas-, Wasser-, Wärmemengen- oder Energiezähler, Sensoreinheiten, wie z. B. Füllstandsensoren oder Temperaturmesseinrichtungen, oder andere Sensorknoten z. B. einer IoT (Internet of Things)-Anwendung handeln. Der Funkknoten 1 des Datensammlers 7 ist dabei derart hergerichtet, dass dieser Daten 5 mittels Funk an die Endgeräte 6 übertragen und/oder von diesen empfangen kann. Ebenfalls kann der jeweilige Funkknoten 1 der Endgeräte 6 die Daten 5 an den Datensammler 7 übertragen und/oder von diesem empfangen.

Bei den Daten 5 kann es sich beispielsweise um Betriebsdaten oder Programmaktualisierungsdaten bzw. Firmwareupdate-Daten oder Verbrauchsdaten handeln, die vom Datensammler 7 an die Endgeräte 6 und/oder umgekehrt übertragen werden. Der Datensammler 7 kann die Daten 5 z. B. von einer (in den Figuren nicht dargestellten) übergeordneten Zentraleinheit empfangen, in einem Datenspeicher 8 hinterlegen und anschließend an die Endgeräte 6 senden. Ferner kann der Datensammler 7 die Daten 5 von den Endgeräten 6 empfangen, in dem Datenspeicher 8 abspeichern und diese an die übergeordnete Zentraleinheit weiterleiten. Die Daten 5 werden dabei, wie in Fig. 2 dargestellt, in Form von mindestens einem Datenpaket, vorzugsweise einer Mehrzahl von Datenpaketen 5a übertragen. Hierbei können die Daten 5 mittels eines Telegramm-Splitting-Verfahrens, vorzugsweise über unterschiedliche Frequenzkanäle, versendet werden.

Die Daten 5 können hierbei in den lizenzfreien ISM-Bändern, vorzugsweise in einem Frequenzband im Bereich von 865,0 - 868,0 MHz oder 868,0 - 868,6 MHz oder 869,4 - 869,65 MHz oder 902 - 928 MHz übertragen werden. Der Funkknoten kann mit einer Symbolrate kann zwischen 2360 Symbole/s und 2400 Symbole/s, vorzugsweise mit einer Symbolrate von 2380,371 Symbole/s, arbeiten. Die Daten können zudem mit einer kodierten Datenrate kleiner als 100 kbit/s, vorzugsweise kleiner als 50 kbit/s, besonders bevorzugt kleiner als 15 kbit/s, ganz besonders bevorzugt kleiner als 1 kbit/s, und/oder mit einer unkodierten Datenrate kleiner als 35 kbit/s, vorzugsweise kleiner als 15 kbit/s, besonders bevorzugt kleiner als 5 kbit/s, ganz besonders bevorzugt kleiner als 1 kbit/s übertragen werden.

Die Empfangsempfindlichkeit $P_r$ des Funkknotens 1 gibt den minimalen Empfangspegel an, mit dem ein Empfang der Daten 5 noch möglich ist. Wenn die Funksignalleistung der Daten 5 oder der daraus abgeleiteten Signale unterhalb der Empfangsempfindlichkeit $P_r$ des Funkknotens 1 liegt, ist kein Empfang möglich. Die Empfangsempfindlichkeit $P_r$ lässt sich durch die Formel

$$P_r = P_{th} + 10 \log(B) + F + SNR \qquad (1)$$

berechnen. Hierbei ist $P_{th}$ das thermische Rauschen, B die Bandbreite, F die Rauschzahl des Funkknotens 1 und SNR das Signal-Rausch-Verhältnis, also das Verhältnis der Nutzsignalleistung zu der Rauschleistung. Wird das Signal-Rausch-Verhältnis unterschritten, ist kein Empfang mehr möglich. Das thermische Rauschen $P_{th}$ wird durch zufällige freie Bewegungen von Elektronen in Leitern erzeugt. Das thermische Rauschen $P_{th}$ lässt sich mit der Bolzmannkonstante k, der Temperatur T in Kelvin und der Bandbreite B in Hz durch die Formel

$$P_{th} = kTB \qquad (2)$$

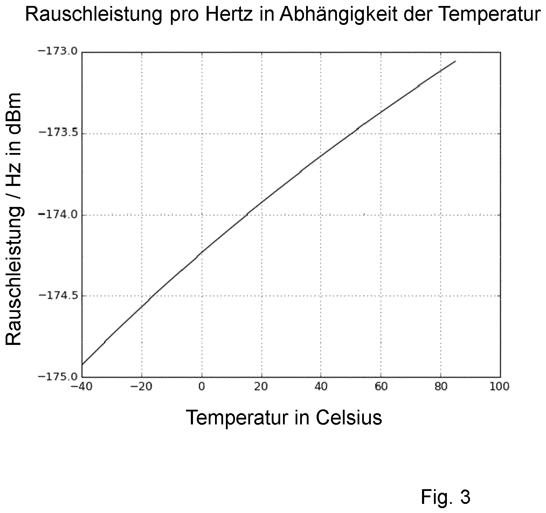

berechnen. Fig. 3 zeigt die Temperaturabhängigkeit des thermischen Rauschens. Es wird deutlich, dass das thermische Rauschen mit zunehmender Temperatur ansteigt.

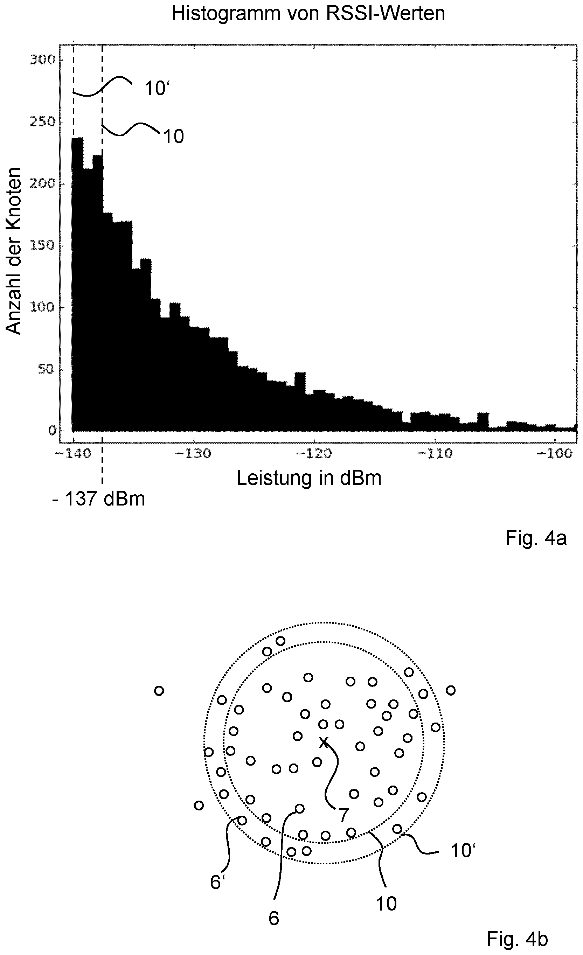

Fig. 4a zeigt ein beispielhaftes Histogramm von Received Signal Strength Indication (RSSI)-Werten. Die RSSI-Werte stellen einen Indikator für die Empfangsfeldstärke kabelloser Kommunikationsanwendungen dar. Lediglich beispielhaft sei im Folgenden die Empfangsempfindlichkeit $P_r$ des Funkknotens 1 -137 dBm. Die Empfangsempfindlichkeit $P_r$ wird in der Fig. 4a beispielhaft durch die gestrichelt gezeichnete Empfangsgrenze 10 dargestellt. Der Funkknoten 1 kann alle Funksignale der Knoten empfangen, deren Leistung größer als Empfangsempfindlichkeit $P_r$ von -137 dBm ist, also Leistungen, welche rechts der Empfangsgrenze 10 in Fig. 4a liegen. Funksignale mit einer geringeren Leistung als -137 dBm (links der Empfangsgrenze 10 in Fig. 4a) können vom Funkknoten 1 hingegen nicht mehr empfangen werden.

Beispielsweise senden gemäß Fig. 4b die Endgeräte 6, 6' (in der Fig. 4b nicht dargestellte) Daten 5 aus, welche von dem (in der Fig. 4b nicht dargestellten) Funcknoten 1 des Datensammlers 7 empfangen werden. Je weiter die Endgeräte 6, 6' vom Datensammler 7 entfernt sind, desto geringer ist die am Funkknoten 1 des Datensammlers 7 empfangene Signalstärke des Funksignals der Daten 5. Die Daten 5 der Endgerät 6', welche sich außerhalb der Empfangsgrenze 10 befinden, können aufgrund deren geringer Signalstärke vom Funkknoten 1 des Datensammlers 7 nicht mehr empfangen werden.

Der erfindungsgemäße Funkknoten 1 ermöglicht es, die Empfangsempfindlichkeit $P_r$ zu verbessern, sodass auch Signale mit einer geringeren Leistung empfangen werden können. So kann es beispielsweise möglich sein, die Empfangsempfindlichkeit $P_r$ um 3 dBm zu reduzieren. Dementsprechend wird die obengenannte beispielhafte Empfangsempfindlichkeit $P_r$ von -137 dBm um 3 dBm reduziert, sodass diese nunmehr bei -140 dBm liegt, wie die gestrichelt dargestellte Linie 10' in Fig. 4a zeigt. Hierdurch können beispielsweise die Funksignale der Knoten links der Empfangsgrenze 10 in Fig. 4a empfangen werden. Dies wird auch in Fig. 4b verdeutlicht, in welcher sich die Empfangsgrenze 10 erweitert, sodass der Funkknoten 1 des Datensammlers 7 die Daten 5 von Endgeräten 6' außerhalb der Empfangsgrenze 10, jedoch innerhalb einer Empfangsgrenze 10' empfangen kann. Somit können Daten 5 von zusätzlichen Endgeräten 6' von dem Funkknoten 1 des Datensammlers 7 empfangen werden.

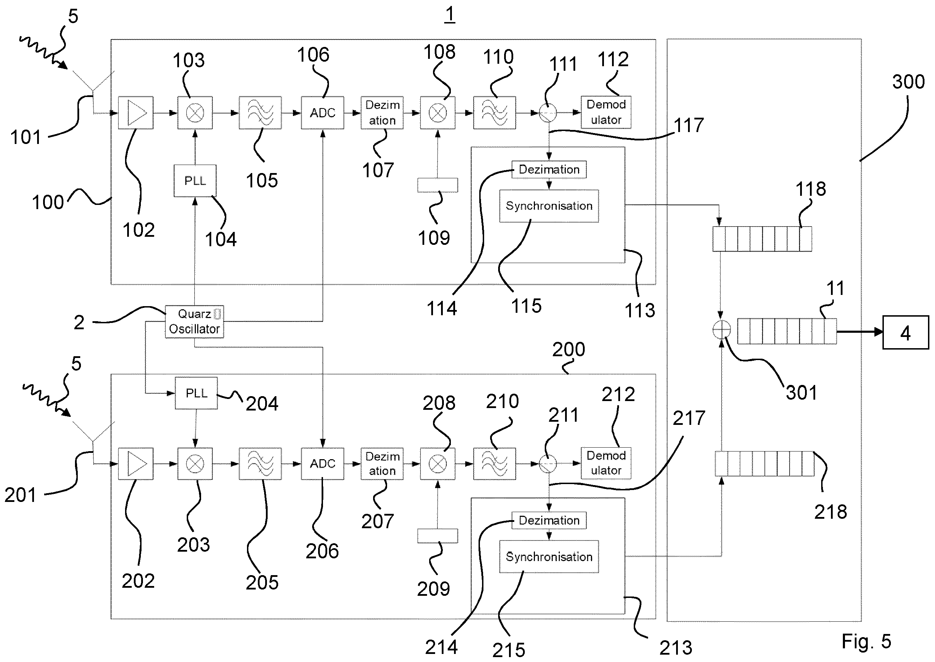

Fig. 5 zeigt eine vereinfachte schematische Darstellung des erfindungsgemäßen Funkknotens 1 gemäß einem ersten Ausführungsbeispiel. Der Funkknoten 1 umfasst hierbei zwei Receiver 100, 200, einen Mikrocontroller 300 und einen Oszillator 2, wobei der Mikrocontroller 300 und der Oszillator 2 mit beiden Receivern 100, 200 verbunden sind. Der Mikrocontroller 300 und der Oszillator 2 sind an dem Funkknoten 1 angeordnet und für beide Receiver 100, 200 gemeinsam vorgesehen. Die beiden Receiver 100, 200 umfassen hierbei im Wesentlichen dieselben Hardwarekomponenten.

Der erste Receiver 100 empfängt die Daten 5 in Form mindestens eines Datenpakets oder eines Teils davon mit einer bestimmten Datenrate mittels einer Antenne 101. Die empfangenen Daten 5 werden einem Puffer 102 gepuffert und anschließend einem Mischer 103 zugeführt. Der Mischer 103 ist mit einer PLL (Phasenregelschleife) 104 verbunden, welche mit dem Oszillator 2 verbunden ist. Der Oszillator 2 schwingt hierbei auf einer bestimmten Taktung, welche der PLL 104 mitgeteilt wird. Die PLL 104 generiert basierend auf der Taktung des Oszillators 2 eine Empfangsträgerfrequenz, z. B. im Bereich von 800 bis 1.000 MHz. Durch den Mischer 103 wird die Signalfrequenz der Daten 5 an die Empfangsträgerfrequenz angepasst. Die Daten 5 werden anschließend einem Filter 105 zugeführt, welcher die Daten 5 an einen Analog-Digital-Wandler (ADC) 106 weiterleitet. Der ADC 106 wird ebenfalls von dem Oszillator 2 angesteuert. Im Anschluss an die Digitalisierung durch den ADC 106 werden die Daten mittels einer Dezimierungseinheit 107 dezimiert und einem Mischer 108 zugeführt. Der Mischer 108 erhält zudem eine Referenzfrequenz von einem numerisch gesteuerten Oszillator (NCO) 109. Hierdurch wird die Frequenz der digitalisierten Daten 5 justiert. Danach werden die Daten 5 einem weiteren Filter 110 und anschließen einem Demodulator 112 zugeführt. Die Daten 5 können durch den Demodulator 112 demoduliert und weiterverarbeitet werden.

Zwischen dem Filter 110 und dem Demodulator 112 ist eine Schalteinrichtung 111 angeordnet. Mittels der Schalteinrichtung 111 können die Daten 5 aus der Verarbeitung abgezweigt werden, sodass sie dem Demodulator 112 nicht mehr zugeführt werden. Die abgezweigten Daten 117 werden einem Mikrocontroller 113 des Receivers 100 zugeleitet. In diesem Mikrocontroller 113 werden die Daten 117 mit einer Dezimierungseinheit 114 dezimiert und mit einer Synchronisierungseinheit 115 synchronisiert. Mit Hilfe der Synchronisation kann mittels der Daten 117 der Zeitpunkt bestimmt werden, wann die Daten 5 an dem Receiver 100 angekommen bzw. von diesem empfangen wurden. Der Mikrocontroller 113 kann im Anschluss daran die Phase und/oder die Gruppenlaufzeit der Daten 117 ermitteln oder schätzen.

Der zweite Receiver 200 empfängt mittels einer Antenne 201 die gleichen Daten 5 wie der erste Mikrocontroller 100. Die hardwareseitige Verarbeitung der Daten 5 auf dem zweiten Receiver 200 findet analog zum ersten Receiver 100 statt. Die Daten 5 werden einem Puffer 202 zugeleitet und im Anschluss daran mittels eines Mischers 203, welcher mit einer mit dem Oszillator 2 in Verbindung stehender PLL 204 verbunden ist, an die Empfangsträgerfrequenz angepasst. Danach werden die Daten 5 mittels eines Filters 205 gefiltert und einem ADC 206 zugeleitet, welcher in Verbindung mit dem Oszillator 2 steht. Nach einer Dezimierung der Daten 5 in einer Dezimierungseinheit 207 werden die Daten 5 einem weiteren Mischer 208 zugeführt, welcher die Daten 5 mit Hilfe einer Frequenz eines NCO 209 justiert. Nach einer weiteren Filterung in einem Filter 210 können die Daten mittels einer Schalteinrichtung 211 entweder einem Demodulator 212 oder einem Mikrocontroller 213 des Receivers 200 zugeleitet werden.

In dem Mikrocontroller 213 werden die abgezweigten Daten 217 mit einer Dezimierungseinheit 214 dezimiert und mittels einer Synchronisierungseinheit 215 synchronisiert. Der Mikrocontroller 213 kann im Anschluss daran die Phase und/oder die Gruppenlaufzeit der Daten 217 ermitteln oder schätzen.

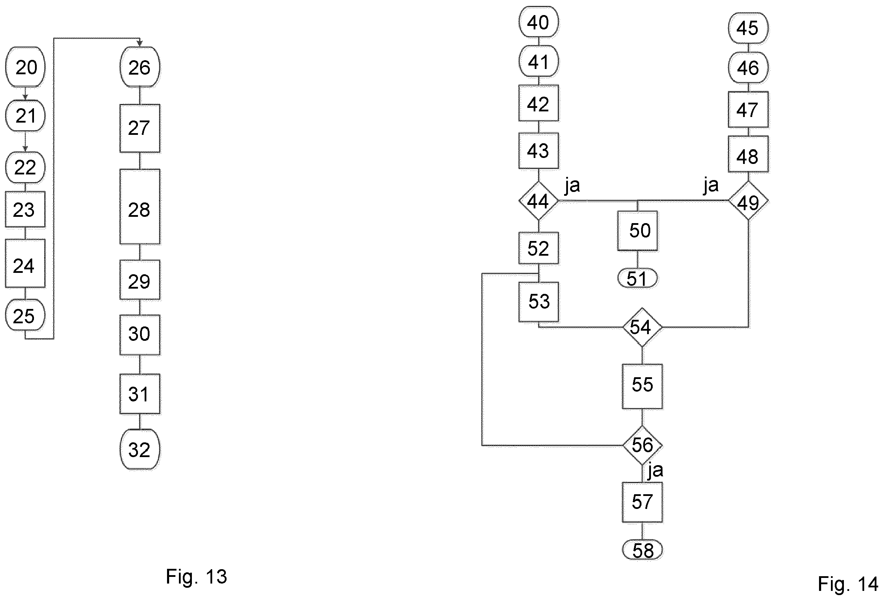

Die Mikrocontroller 113, 213 können die Gruppenlaufzeit und/oder die Phase der abgezweigten Daten 117, 217 und/oder eine Phasenverschiebung und/oder einen Gruppenlaufzeitunterschied zwischen den in den jeweiligen Receivern 100, 200 abgezweigten Daten 117, 217 schätzen oder ermitteln. Dies kann mittels eines Brute-Force-Verfahrens, vgl. Ausführungen zu Fig. 13, oder durch mindestens ein im Vergleich zu den Funksignalen weiterer Funkknoten energiereicheres Funksignal oder mittels einer Bestimmung der Phasendifferenz, vgl. Ausführungen zu Fig. 14, geschehen. Der Gruppenlaufzeitunterschied und/oder die Phasenverschiebung können bzw. kann abspeichert werden.

Bei der zweiten Alternative zur Schätzung oder Ermittlung der Phasenverschiebung und/oder des Gruppenlaufzeitunterschieds mittels mindestens einem im Vergleich zu den Funksignalen weiterer Funkknoten energiereicheren Funksignal bzw. der Daten des energiereicheren Funksignals, werden die Funksignale bzw. Daten von Funksendern verwendet, welche sich z. B. in der Nähe des Funkknotens 1 in dessen Funksystem befinden. Diese weisen eine höhere Signalleistung auf und können somit bereits vor der Reduktion der Empfangsempfindlichkeit $P_r$ empfangen werden, wie oben zu Figuren 4a und 4b erläutert. Mit Hilfe der energiereicheren Funksignale bzw. deren Daten kann nun der Gruppenlaufzeitunterschied und/oder die Phasenverschiebung zwischen den abgezweigten Daten 117, 217 bestimmt werden.

Basierend auf dem bzw. der geschätzten oder ermittelten Gruppenlaufzeitunterschied und/oder Phasenverschiebung kann die Gruppenlaufzeit und/oder die Phase der abgezweigten Daten 117, 217 der mindestens zwei Receiver 100, 200 einander angeglichen oder angepasst werden.

Die einander angeglichenen oder angepassten Daten 118, 218 werden an den Mikrocontroller 300 weitergleitet und dort mittels einer Kombinationseinheit 301 kombiniert bzw. addiert. Da die Daten 118, 218 hinsichtlich ihrer Gruppenlaufzeit und/oder Phase im Wesentlichen nicht gegeneinander verschoben sind werden diese konstruktiv kombiniert bzw. addiert. Hierdurch verstärkt sich das Signal der Daten 118, 218. Das in den jeweiligen Receivern 100, 200 durch die Hardware und/oder die Signal- bzw. Datenverarbeitung und/oder durch zufällige Störungen im Übertragungskanal erzeugte weiße Rauschen hingegen steht nicht in Korrelation zueinander und wird durch die Kombination bzw. Addition der Daten 118, 218 im Wesentlichen nicht erhöht. Es erhöht sich somit nur die Signalstärke der Daten 118, 218 bzw. das Signal-Rausch-Verhältnis, wodurch die Empfangsempfindlichkeit $P_r$ des Funkknotens gesteigert werden kann. Die kombinierten bzw. addierten Daten 11 werden im Anschluss an einen Decoder 4 für eine weitere Verarbeitung weiter-

**EP 4 277 155 A1**

geleitet.

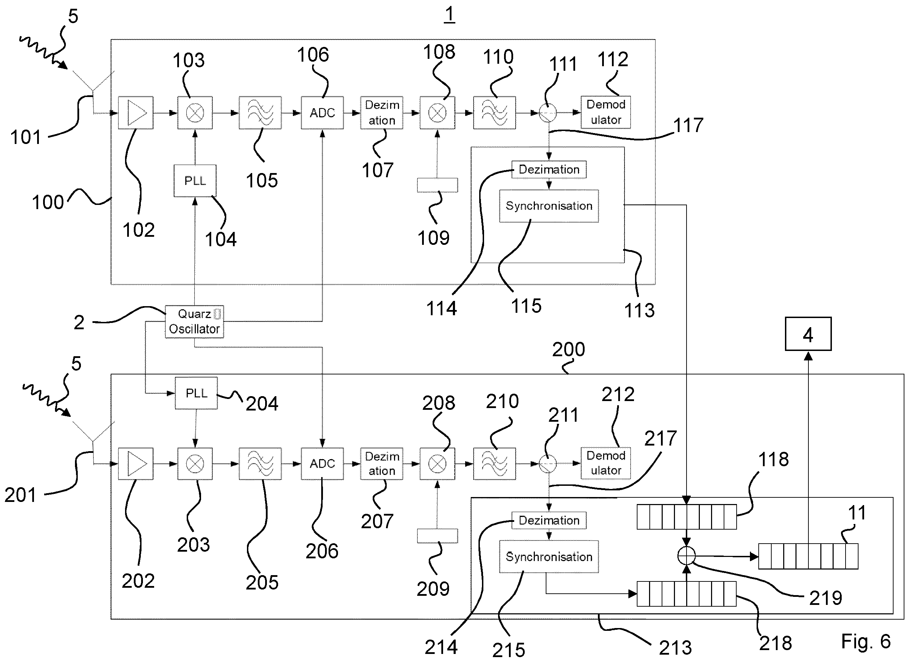

Fig. 6 zeigt ein zweites Ausführungsbeispiel des erfindungsgemäßen Funkknotens 1. Der Funkknoten 1 umfasst hierbei ebenfalls die Receiver 100, 200 und den Oszillator 2. Es fehlt in dem Ausführungsbeispiel jedoch an dem Mikrocontroller 300.

Die Daten 5 werden hierbei im Wesentlichen wie im ersten Ausführungsbeispiel gemäß Fig. 5 von den Receiver 100, 200 empfangen, verarbeitet, abgezweigt und einander angeglichen bzw. angepasst. Die angeglichenen oder angepassten Daten 118 des ersten Receivers 100 werden nun an den Mikrocontroller 213 des zweiten Receivers 200 weitergeleitet. Im Mikrocontroller 213 werden die Daten 118, 218 mittels einer Kombinationseinheit 219 kombiniert bzw. addiert und im Anschluss daran dem Decoder 4 zugeführt. Alternativ kann die Kombination der Daten 118, 218 auch auf dem Mikrocontroller 113 des ersten Receivers 100 stattfinden.

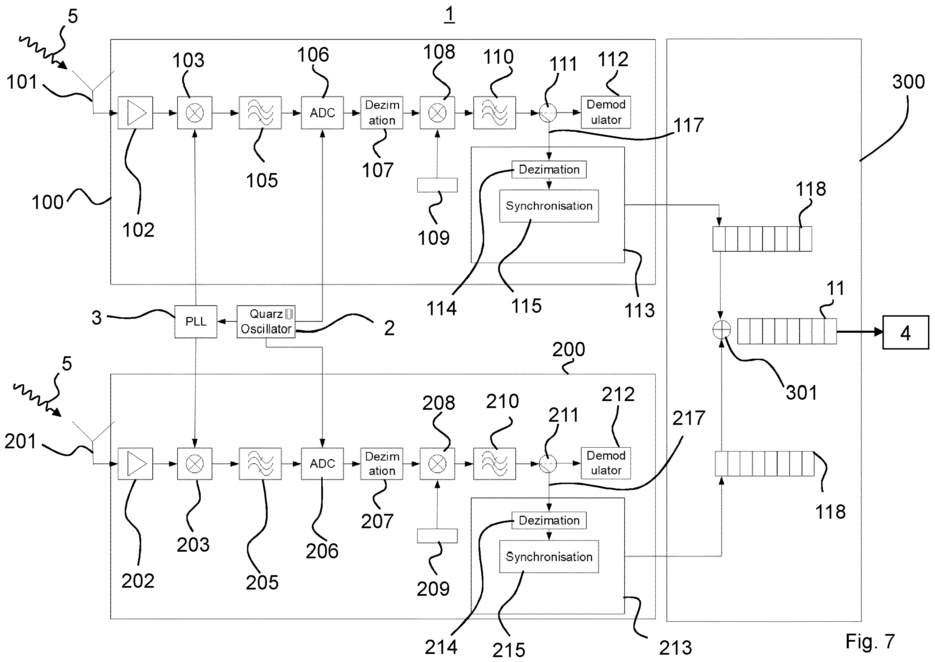

Fig. 7 zeigt den Funkknoten 1 gemäß einem dritten Ausführungsbeispiel. Hierbei werden die Daten 5 im Wesentlichen wie im ersten Ausführungsbeispiel gemäß Fig. 5 bearbeitet. Jedoch ist eine gemeinsame PLL 3 für beide Receiver 100, 200 am Funkknoten 1 vorgesehen. In diesem Fall sind die internen PLLs 104, 204 der Receiver 100, 200 deaktiviert. Hierdurch kann sichergestellt werden, dass beide Mischer 103, 203 die im Wesentlichen identische Empfangsträgerfrequenz verwenden.

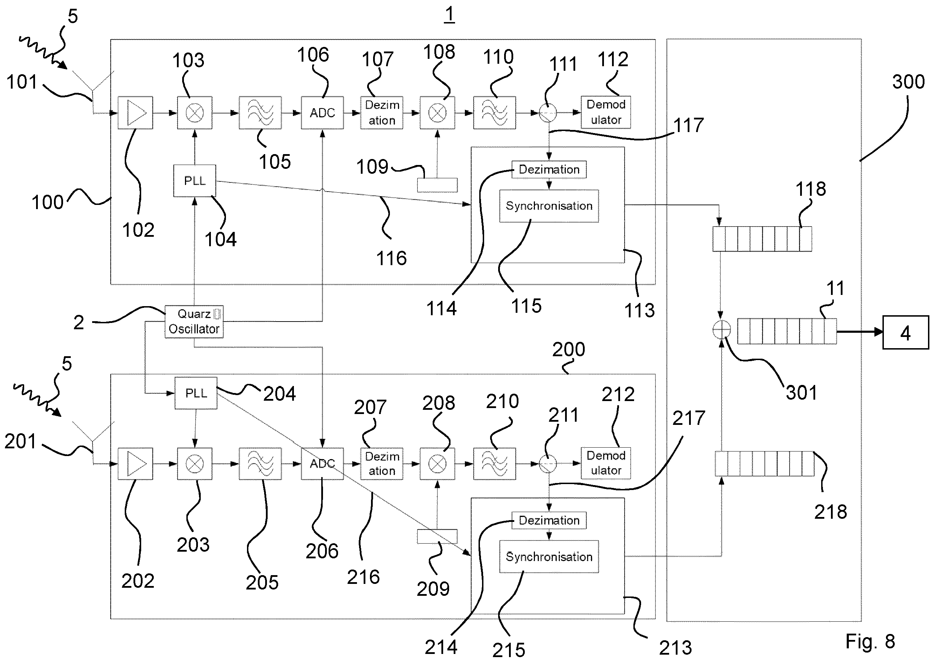

Gemäß einem vierten Ausführungsbeispiel des erfindungsgemäßen Funkknotens 1, vgl. Fig. 8, kann die jeweilige PLL 104, 204 der Receiver 100, 200 die verwendete Startphase den entsprechenden Mikrocontrollern 113, 213 über eine Verbindung 116, 216 direkt mitteilen. Hierdurch ist die Phase der abgezweigten Daten 117, 217 bekannt, wodurch diese nicht mehr geschätzt bzw. ermittelt werden muss. Die Verarbeitung der Daten 5 durch die beiden Receiver 100, 200 entspricht ansonsten dem ersten Ausführungsbeispiel gemäß Fig. 5.

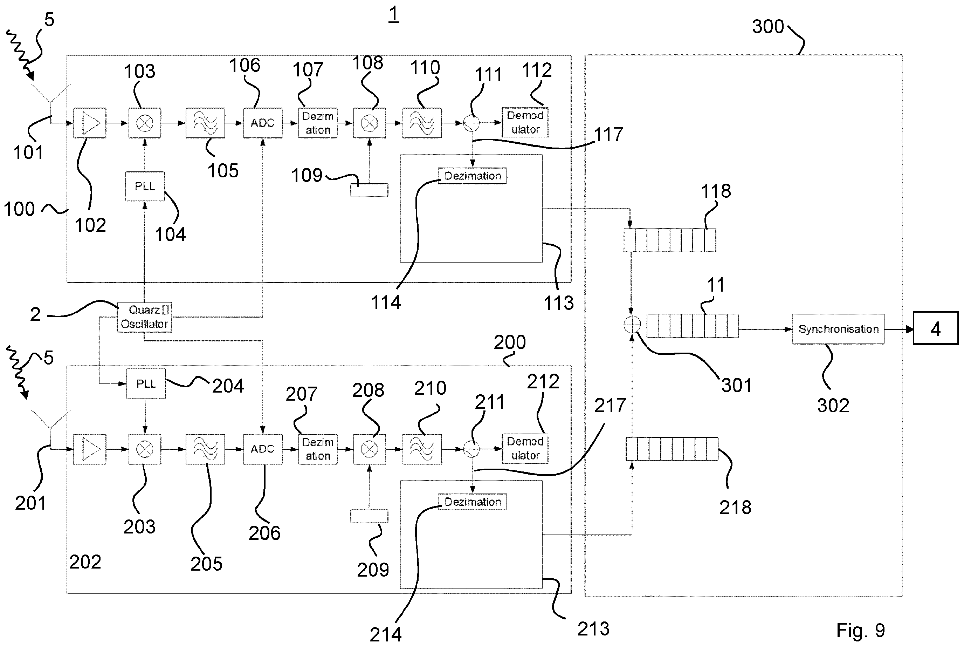

Gemäß einem fünften Ausführungsbeispiel nach Fig. 9 ist in den entsprechenden Mikrocontroller 113, 213 der Receiver 100, 200 keine Synchronisation der Daten 117, 217 vorgesehen. Die Synchronisation findet stattdessen erst nach der Kombination der Daten 118, 218 statt. Die kombinierten Daten 11 werden gemäß Fig. 9 einer Synchronisationseinheit 302 im Mikrocontroller 300 zugeleitet, bevor sie an den Decoder 4 weitergeleitet werden. Die Synchronisation nach der Kombination der Daten 11 kann auch auf einem der Mikrocontroller 113, 213, z. B. nach einer Kombination der Daten 118, 218 mittels der Kombinationseinheit 219 gemäß dem zweiten Ausführungsbeispiel, vgl. Fig. 6, stattfinden.

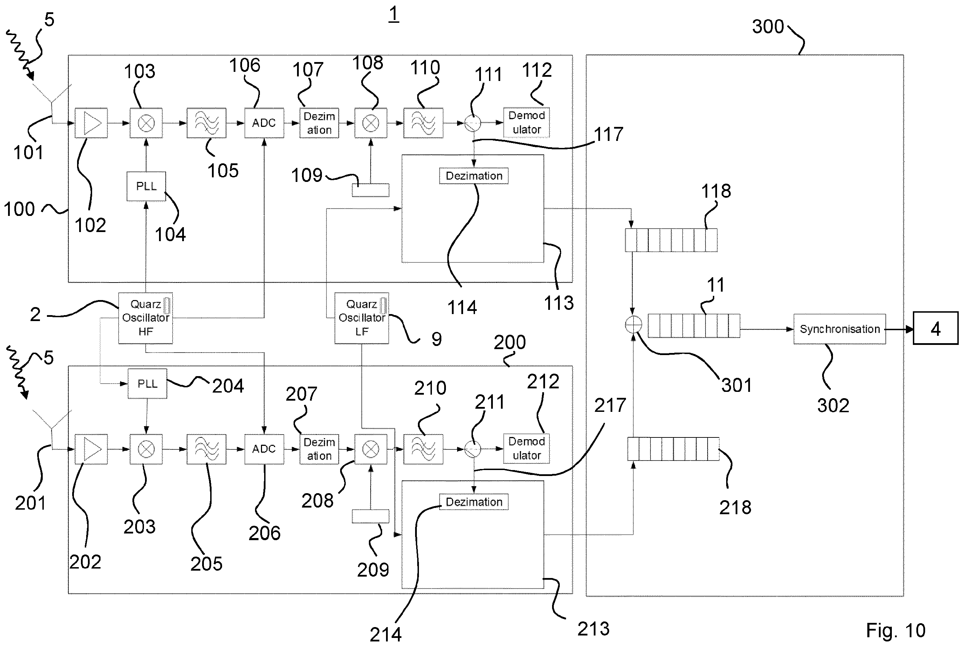

Gemäß Fig. 10 kann in einem sechsten Ausführungsbeispiel des Funkknotens 1 eine zusätzlicher Oszillatoreinrichtung 9 vorgesehen sein. Die Oszillatoreinrichtung 9 ist z. B. ein niederfrequenter (LF)-Oszillator, welcher für beide Receiver 100, 200 gemeinsam vorgesehen ist. Die Oszillatoreinrichtung 9 steht mit den Mikrocontrollern 113, 213 der beiden Receiver 100, 200 in Verbindung und kann diese aus einem Ruhezustand aufwecken, wenn ein Empfangsfenster beginnt. Hierdurch wird es ermöglicht, dass sich die Mikrocontroller 113, 213 in einen Ruhezustand versetzen, wenn sie nicht benötigt werden. Hierdurch kann zusätzliche Energie eingespart werden.

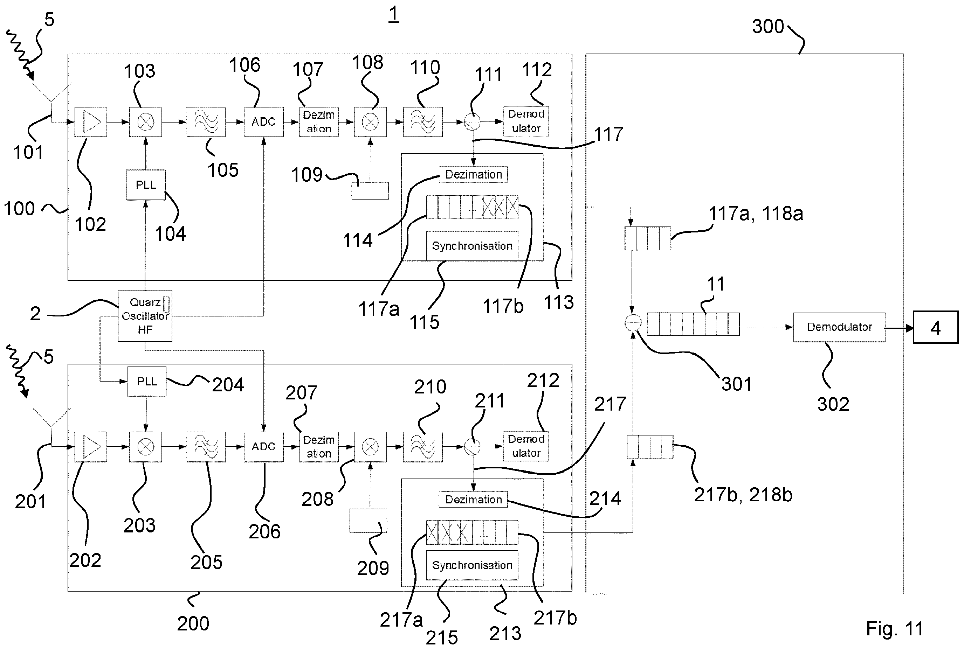

Fig. 11 zeigt ein siebtes Ausführungsbeispiel des Funkknotens 1. Hierbei werden die Daten 5 wie oben beschrieben mittels der Schalteinrichtung 111, 211 abgezweigt. Jedoch bearbeiten die Mikrocontroller 113, 213 der Receiver 100, 200 nur jeweils nur ein Datensegment 117a, 217b der abgezweigten Daten 117, 217. So wird vom Mikrocontroller 113 des ersten Receivers 100 nur ein Datensegment 117a der abgezweigten Daten 117 bearbeitet. Der Mikrocontroller 213 des zweiten Receivers 200 hingegen bearbeitet ein Datensegment 217b der abgezweigten Daten 217. Die von den jeweiligen Mikrocontrollern 113, 213 nicht bearbeiteten Datensegmente 117b, 217a sind in der Fig. 11 mittels eines "X" durchgestrichen. Diese Datensegmente 117b, 217a werden vom jeweiligen Mikrocontroller 113, 213 verworfen. Die bearbeiteten Datensegmente 117a, 217b werden im Anschluss mit den jeweiligen Synchronisationseinheiten 115, 215 synchronisiert.

Die bearbeiteten Datensegmente 117a, 217b können hinsichtlich ihres Gruppenlaufzeitunterschieds und/oder ihrer Phasenverschiebung aneinander angeglichen oder angepasst werden. Die angeglichenen oder angepassten Datensegmente 118a, 218b können anschließend im Mikrocontroller 300 aneinandergehängt bzw. kombiniert werden. Alternativ können die Datensegmente 117a, 217b ohne eine Angleichung oder Anpassung direkt aneinandergehängt bzw. kombiniert werden. Zweckmäßigerweise ergänzen sich die Datensegmente 117a, 217b bzw. 118a, 218b, sodass durch die Kombination der Datensegmente 117a, 217b bzw. 118a, 218b die empfangenen Daten 5 in Form eines Datenpakets oder eines Teils davon rekonstruiert werden können. Anschließend werden die Daten 11 vorzugsweise mittels eines Demodulators 303 demoduliert und mittels eines Decoders 4 decodiert.

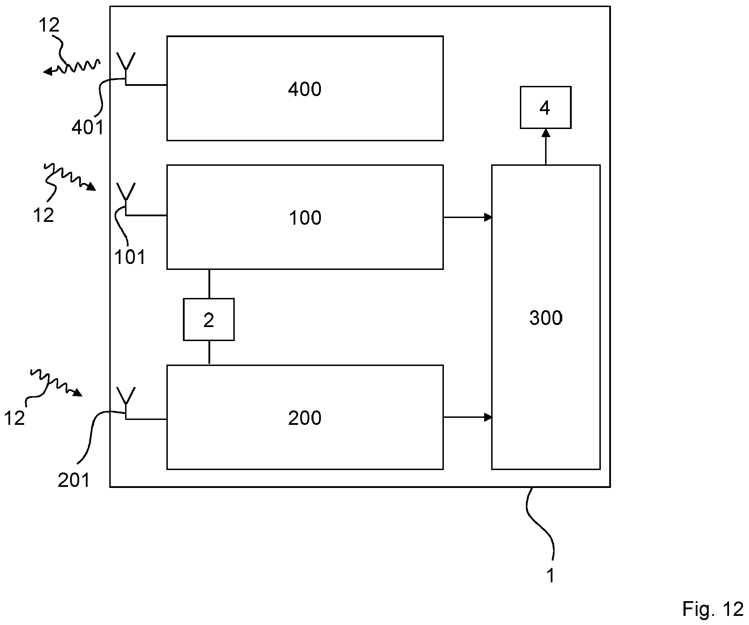

Gemäß einem achten Ausführungsbeispiel des Funkknotens 1, vgl. Fig. 12, kann der Funkknoten 1 Daten 10 zur Selbstkalibrierung aussenden. Hierbei sendet ein Sender 400 mittels der Antenne 401 die Daten 10 aus, welche von den Antennen 101, 201 der Receiver 100, 200 empfangen werden. Hierdurch kann der Gruppenlaufzeitunterschied und/oder die Phasenverschiebung zwischen den beiden Receivern 100, 200 vorab geschätzt oder ermittelt und im Anschluss daran zur weiteren Verwendung abgespeichert werden.

Fig. 13 zeigt ein beispielhaftes Flussdiagramm zur Schätzung des Gruppenlaufzeitunterschieds und/oder der Phasendifferenz mittels des Brute-Force-Verfahrens. Hierbei wird zu Beginn der Funkknoten 1 mit den Receivern 100, 200 eingeschaltet, Schritt 20. Im Anschluss daran wir eine Kalibrierungsphase gestartet, Schritt 21, und mehrere Daten 5 abgezweigt, Schritt 22.

9

In Schritt 23 wird nun der Gruppenlaufzeitunterschied zwischen den abgezweigten Daten 117, 217 geschätzt oder ermittelt. Da die Hardware der Receiver 100, 200 bekannt ist, ist der Bereich des möglichen Gruppenlaufzeitunterschieds ebenfalls bekannt. Die Schätzung oder Ermittlung des Gruppenlaufzeitunterschieds kann insbesondere mit einer, z. B. doppelten, Überabtastung durchgeführt werden. Bei einer beispielsweisen Symboldauer von 10 µs ist ein Sample bei einer doppelten Überabtastung 5 µs lang. Nun können die abgezweigten Daten 117, 217 um ein Sample, z. B. ±5 µs, verschoben werden. Anschließend kann überprüft werden, ob die Gruppenlaufzeiten der abgezweigten Daten 117, 217 im Wesentlichen übereinstimmen. Das Verschieben der Samples wird so lange wiederholt, bis die Gruppenlaufzeiten der abgezweigten Daten 117, 217 im Wesentlichen übereinstimmen.

Im Anschluss daran wird die Phasenverschiebung der abgezweigten Daten 117, 217 geschätzt bzw. ermittelt, Schritt 24. Hierbei müssen je nach Genauigkeitsanforderung unterschiedlich viele Phasenverschiebungen überprüft werden. Hierfür werden die Phasen der abgezweigten Daten 117, 217 so lange um eine bestimmte Phase verschoben, bis die Phasen der Daten 217, 218 angepasst bzw. angeglichen sind. So müssen beispielsweise bei einer Genauigkeitsanforderung von 22,5° an die Phasenverschiebung 16 (360°/22,5° = 16) mögliche Phasenverschiebungen überprüft werden. Alternativ kann die Schätzung oder Ermittlung der Phasenverschiebung auch vor der Schätzung oder Ermittlung des Gruppenlaufzeitunterschieds durchgeführt werden.

Wenn der Gruppenlaufzeitunterschied und die Phasenverschiebung geschätzt oder ermittelt wurden, endet die Kalibrierungsphase, Schritt 25, und die Empfangsphase startet, Schritt 26. In der Empfangsphase werden die Gruppenlaufzeiten der abgezweigten Daten 117, 217 um die geschätzte oder ermittelte Gruppenlaufzeitverschiebung verzögert, Schritt 27. Im Anschluss daran wird die Phase der abgezweigten Daten 117, 217 mit der geschätzten oder ermittelten Phasendifferenz verschoben, Schritt 28. Das Verschieben der Phase, Schritt 28, und die Verzögerung der Gruppenlaufzeit, Schritt 27, können auch in einer umgekehrten Reihenfolge durchgeführt werden. Daran anschließend werden die angepassten oder angeglichenen Daten 118, 218 addiert bzw. kombiniert, Schritt 29, synchronisiert, Schritt 30, und decodiert, Schritt 31. Im Anschluss daran wird der Funkknoten 1 mit den Receivern 100, 200 ausgeschaltet, Schritt 32.

Fig. 14 zeigt ein beispielhaftes Flussdiagramm zur Schätzung oder Ermittlung eines Gruppenlaufzeitunterschieds. Hierbei werden zuerst die Receiver 100, 200 eingeschaltet, Schritte 40 und 45. Im Anschluss daran wird geprüft, ob abgezweigte Daten 117, 217 vorhanden sind, Schritt 41 und 46. Im Anschluss daran werden Phasendifferenzen zwischen einem Sample der abgezweigten Daten mit einem vorherigen Sample der abgezweigten Daten gebildet, Schritt 42 und 47.

Hierbei kann es sich um zwei direkt aufeinanderfolgende Samples oder um zwei Samples handeln, welche um N Samples, z. B. 4 oder 5 Samples, verschoben sind. Hierdurch kann die Phasenverschiebung und/oder die Trägerfrequenzverschiebung zwischen den von den mindestens zwei Receivern abgezweigten Daten vernachlässigt werden. Anschließend werden die Phasendifferenzen einzeln korreliert, Schritt 43 und 48. Nach der Korrelation wird eine Maximalwertsuche durchgeführt, Schritt 44, 49. Insbesondere bei hohen SNR können Maximalwerte (Peaks) gefunden werden. Wenn für die beide korrelierten Daten die Maximalwertsuche erfolgreich ist, werden die Zeiten voneinander subtrahiert und hierdurch ein Gruppenlaufzeitunterschied ermittelt, Schritt 50. Anschließend ist das Verfahren beendet, Schritt 51.

Wenn die Maximalwertsuche nicht erfolgreich ist, werden die Phasendifferenzen von einem Receiver, z. B. von dem ersten Receiver 100, auf den anderen Receiver, z. B. auf den zweiten Receiver 200, kopiert, Schritt 52. Die Daten des ersten Receivers 100, werden um eine Hypothesenverschiebung verschoben, Schritt 53. Anschließend werden die Phasendifferenzen addiert, Schritt 54. Die addierten Phasendifferenzen werden korreliert, Schritt 55, und auf Maximalwerte (Peaks) durchsucht, Schritt 56. Wenn ein Maximalwert gefunden wurde, wird die Hypothesenverschiebung als Gruppenlaufzeitunterschied abgespeichert, Schritt 57, und das Verfahren ist beendet, Schritt 58.

Sollte in Schritt 56 kein Maximalwert gefunden werden, wird das Verfahren ab Schritt 53 solange wiederholt, bis ein Maximalwert in Schritt 56 gefunden wird.

Der erfindungsgemäße Funkknoten 1 weißt somit aufgrund der Kombination der empfangenen Daten 5 eine verbesserte Empfangsempfindlichkeit $P_r$ auf, sodass auch energieärmere Funksignale sowie deren Daten 5 empfangen werden können.

Es wird ausdrücklich darauf hingewiesen, dass auch die Kombination von Einzelmerkmalen sowie Untermerkmalen als erfindungswesentlich und vom Offenbarungsgehalt der Anmeldung umfasst anzusehen sind.

**BEZUGSZEICHENLISTE**

1      Funkknoten
2      Oszillator
3      Phasenregelschleife (PLL)

| | |
|---|---|
| 4 | Decoder |
| 5 | Daten |
| 5a | Datenpaket |
| 6 | Endgerät |
| 7 | Datensammler |
| 8 | Speicher |
| 9 | Oszillatoreinrichtung |
| 10 | Empfangsgrenze |
| 10' | Empfangsgrenze |
| 11 | Daten |
| 12 | Daten |
| | |
| 20 | Anschalten |
| 21 | Kalibrierungsphasenbeginn |
| 22 | Abzweigung |
| 23 | Gruppenlaufzeitunterschiedsbestimmung |
| 24 | Phasenverschiebungsbestimmung |
| 25 | Kalibrierungsphasenende |
| 26 | Empfangsphasenbeginn |
| 27 | Gruppenlaufzeitanpassung |
| 28 | Phasenanpassung |
| 29 | Addition |
| 30 | Synchronisation |
| 31 | Decodierung |
| 32 | Ausschalten |
| | |
| 40 | Einschalten |
| 41 | Prüfen |
| 42 | Phasendifferenzbildung |
| 43 | Korrelierung |
| 44 | Maximalwertsuche |
| 45 | Einschalten |
| 46 | Prüfen |
| 47 | Phasendifferenzbildung |
| 48 | Korrelierung |
| 49 | Maximalwertsuche |
| 50 | Zeitsubtraktion |
| 51 | Ende |
| 52 | Phasendifferenzkopierung |
| 53 | Verschieben |
| 54 | Phasendifferenzaddition |
| 55 | Korrelierung |
| 56 | Maximalwertsuche |
| 57 | Verschiebung speichern |
| 58 | Ende |
| | |
| 100 | Receiver |
| 101 | Antenne |
| 102 | Puffer |
| 103 | Mischer |
| 104 | Phasenregelschleife (PLL) |
| 105 | Filter |
| 106 | Analog-Digital-Wandler (ADC) |
| 107 | Dezimierungseinheit |
| 108 | Mischer |
| 109 | numerisch gesteuerter Oszillator (NCO) |
| 110 | Filter |
| 111 | Schalteinrichtung |

| | |
|---|---|
| 112 | Demodulator |
| 113 | Mikrocontroller |
| 114 | Dezimierungseinheit |
| 115 | Synchronisierungseinheit |
| 116 | Verbindung |
| 117 | Daten |
| 117a | Datensegment |
| 117b | Datensegment |
| 118 | Daten |
| 118a | Datensegment |
| | |
| 200 | Receiver |
| 201 | Antenne |
| 202 | Puffer |
| 203 | Mischer |
| 204 | Phasenregelschleife (PLL) |
| 205 | Filter |
| 206 | Analog-Digital-Wandler (ADC) |
| 207 | Dezimierungseinheit |
| 208 | Mischer |
| 209 | numerisch gesteuerter Oszillator (NCO) |
| 210 | Filter |
| 211 | Schalteinrichtung |
| 212 | Demodulator |
| 213 | Mikrocontroller |
| 214 | Dezimierungseinheit |
| 215 | Synchronisierungseinheit |
| 216 | Verbindung |
| 217 | Daten |
| 217a | Datensegment |
| 217b | Datensegment |
| 218 | Daten |
| 218b | Datensegment |
| 219 | Kombinationseinheit |
| | |
| 300 | Mikrocontroller |
| 301 | Kombinationseinheit |
| 302 | Synchronisationseinheit |
| 303 | Demodulator |
| | |
| 400 | Sender |
| 401 | Antenne |
| | |
| $P_r$ | Empfangsempfindlichkeit |
| $P_{th}$ | thermisches Rauschen |
| B | Bandbreite |
| F | Rauschzahl |
| SNR | Signal-Rausch-Verhältnis |
| k | Bolzmannkonstante |
| T | Temperatur |

**Patentansprüche**

1. Funkknoten (1) für den Einsatz, insbesondere in einer energieautarken, vorzugsweise in einer langzeitenergieautarken Umgebung, wobei der Funkknoten (1) Daten (5) in Form mindestens eines Datenpakets oder eines Teils davon mit einer bestimmten Datenrate empfängt und zur Datenweiterverarbeitung bereitstellt, **dadurch gekennzeichnet, dass**

12

der Funkknoten (1) mindestens zwei Receiver (100, 200), die jeweils als integrierter Schaltkreis ausgebildet, insbesondere als eigenständiger integrierter Schaltkreis, jedoch zueinander parallelgeschaltet sind, umfasst, wobei jeder Receiver (100, 200) in der Lage ist, die Daten (5) in Form mindestens eines Datenpakets oder eines Teils davon mit einer bestimmten Datenrate zu empfangen und zu einer ersten Datenweiterverarbeitung bereitzustellen,

die zu der ersten Datenweiterverarbeitung bereitgestellten Daten der mindestens zwei Receiver (100, 200) kombiniert werden, und

die kombinierten Daten (11) für eine zweite Datenweiterverarbeitung, insbesondere eine Synchronisation oder eine Decodierung oder eine Demodulation, bereitgehalten werden.

2. Funkknoten (1) nach Anspruch 1, **dadurch gekennzeichnet, dass** für die mindestens zwei Receiver (100, 200)

ein gemeinsamer Oszillator (2) und/oder
eine gemeinsame PLL (3) und/oder
ein gemeinsamer Mikrocontroller (300)
vorgesehen sind bzw. ist,
wobei insbesondere vorgesehen ist, dass der gemeinsame Oszillator (2) und/oder die gemeinsame PLL (3) und/oder der gemeinsame Mikrocontroller (300) zusätzlich zu den mindestens zwei Receivern (100, 200) an dem Funkknoten (1) angeordnet sind bzw. ist.

3. Funkknoten (1) nach einem der vorhergehenden Ansprüche, **dadurch gekennzeichnet, dass** jeder der mindestens zwei Receiver (100, 200) die Daten (5), vorzugsweise über je eine Schalteinrichtung, abzweigt und danach die abgezweigten Daten (117, 217) dezimiert, indem ein Teil aus der Samplemenge ausgewählt wird, wobei insbesondere vorgesehen ist, dass jeder der mindestens zwei Receiver (100, 200) einen Mikrocontroller (113, 213) umfasst, dem die jeweils abgezweigten Daten (117, 217) zugeleitet werden.

4. Funkknoten (1) nach Anspruch 3, **dadurch gekennzeichnet, dass** die Gruppenlaufzeit und/oder Phase der abgezweigten Daten (117, 217) der mindestens zwei Receiver (100, 200) geschätzt oder ermittelt und/oder einander angeglichen oder angepasst wird bzw. werden.

5. Funkknoten (1) nach Anspruch 3 oder 4, **dadurch gekennzeichnet, dass** ein Gruppenlaufzeitunterschied und/oder eine Phasenverschiebung zwischen den von den mindestens zwei Receivern (100, 200) abgezweigten Daten (117, 217) geschätzt oder ermittelt und für das Kombinieren der bereitgestellten Daten verwendet wird.

6. Funkknoten (1) nach Anspruch 4 oder 5, **dadurch gekennzeichnet, dass** die Schätzung oder Ermittlung der Gruppenlaufzeit und/oder Phase und/oder des Gruppenlaufzeitunterschieds und/oder der Phasenverschiebung

mittels eines Brute-Force-Verfahrens, oder
mittels mindestens einem energiereichen Funksignal, oder
mittels einer Bestimmung der Phasendifferenz,
erfolgt.

7. Funkknoten (1) nach einem der Ansprüche 4 bis 6, **dadurch gekennzeichnet, dass** die Gruppenlaufzeit und/oder Phase und/oder der Gruppenlaufzeitunterschied und/oder die Phasenverschiebung gespeichert werden bzw. wird.

8. Funkknoten (1) nach einem der Ansprüche 4 bis 7, **dadurch gekennzeichnet, dass** die Angleichung oder Anpassung der Gruppenlaufzeit und/oder der Phase

auf Basis des geschätzten oder ermittelten Gruppenlaufzeitunterschieds, und/oder
auf Basis der geschätzten oder ermittelten Phasenverschiebung, und/oder
auf Basis der zu den jeweiligen Receivern (100, 200) zugehörenden von der PLL (3) verwendeten Startphase
erfolgt.

9. Funkknoten (1) nach einem der Ansprüche 3 bis 8, **dadurch gekennzeichnet, dass** die Kombination (301) der abgezweigten Daten (117, 217)

auf dem Mikrocontroller (300) des Funkknotens (1), oder
auf einem Mikrocontroller (113, 213) der mindestens zwei Receiver (100, 200)

durchgeführt wird.

10. Funkknoten (1) nach einem der Ansprüche 3 bis 9, **dadurch gekennzeichnet, dass** die abgezweigten Daten (117, 217) vor oder nach der Kombination (301) synchronisiert werden.

11. Funkknoten (1) nach einem der Ansprüche 3 bis 10, **dadurch gekennzeichnet, dass** von den abgezweigten Daten (117) des ersten der mindestens zwei Receiver (100) lediglich ein Teil (117a) und von den abgezweigten Daten (217) des zweiten der mindestens zwei Receiver (200) lediglich ein Teil (217b) ausgewählt und für eine Kombination (301) bereitgestellt wird,
wobei die Auswahl des jeweiligen Teils (117a, 217b) bevorzugt derart erfolgt, dass sich die Teile (117a, 217b) der abgezweigten Daten (117, 217) der mindestens zwei Receiver (100, 200) in Bezug auf die Daten (5) ergänzen.

12. Funkknoten (1) nach einem der Ansprüche 3 bis 11, **dadurch gekennzeichnet, dass** der erste der mindestens zwei Receiver (100) einen ersten Frequenzbereich und/oder einen ersten Zeitbereich der abgezweigten Daten (117) und der zweite der mindestens zwei Receiver (200) einen zweiten Frequenzbereich und/oder einen zweiten Zeitbereich der abgezweigten Daten (217) auswählt und für eine Kombination (301) bereitstellt, wobei insbesondere der erste und der zweite Frequenzbereich und/oder Zeitbereich aneinander angrenzen oder sich zumindest in einem Teilbereich überlappen.

13. Funkknoten (1) nach einem der vorhergehenden Ansprüche, **dadurch gekennzeichnet, dass** der Funkknoten (1) zur Selbstkalibrierung Daten (12) aussendet, die von den mindestens zwei Receivern (100, 200) empfangen werden.

14. Funkknoten (1) nach einem der vorgehenden Ansprüche, **dadurch gekennzeichnet, dass** eine zusätzliche Oszillatoreinrichtung (9), insbesondere ein LF-Oszillator, vorzugsweise für die mindestens zwei Receiver (100,200) gemeinsam, vorgesehen ist.

15. Funkknoten (1) nach einem der vorhergehenden Ansprüche, **dadurch gekennzeichnet, dass** es sich bei den Daten (5) um Daten aus einem Core Frame und/oder aus mindestens einem Extension Frame handelt.

16. Funkknoten (1) nach einem der vorhergehenden Ansprüche, **dadurch gekennzeichnet, dass** die zweite Datenweiterverarbeitung oder die Synchronisation der abgezweigten Daten (117, 217) kohärent oder inkohärent erfolgen kann.

17. Kommunikationssystem zum Übertragen von Daten (5) zwischen mindestens einem, vorzugsweise in einem Datensammler (7) angeordneten, Funkknoten und mehreren energieautarken, vorzugsweise langzeitenergieautarken, insbesondere jeweils in einem Endgerät (6) angeordneten, Funknoten,
**dadurch gekennzeichnet, dass**
als Funkknoten ein Funkknoten (1) nach einem der vorhergehenden Ansprüche vorgesehen ist.

Fig. 1

Fig. 2

Rauschleistung pro Hertz in Abhängigkeit der Temperatur

Fig. 3

## Histogramm von RSSI-Werten

Fig. 4a

Fig. 4b

Fig. 5

Fig. 6

Fig. 7

Fig. 8

Fig. 9

Fig. 10

EP 4 277 155 A1

Fig. 11

Fig. 12

Fig. 14

Fig. 13

**EP 4 277 155 A1**

Europäisches
Patentamt

European
Patent Office

Office européen
des brevets

# EUROPÄISCHER RECHERCHENBERICHT

**Nummer der Anmeldung**

**EP 23 17 1733**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2016/191138 A1 (KIANUSH KAVEH [NL] ET AL) 30. Juni 2016 (2016-06-30) * das ganze Dokument * ----- | 1-17 | INV. H04B7/08 H04B1/00 H04B1/16 |
| A | DE 10 2018 003106 A1 (DIEHL METERING SYSTEMS GMBH [DE]) 29. August 2019 (2019-08-29) * das ganze Dokument * ----- | 1-17 | |
| X | US 2010/075611 A1 (BUDAMPATI RAMAKRISHNA S [US] ET AL) 25. März 2010 (2010-03-25) * Absatz [0064] – Absatz [0074]; Abbildung 5 * ----- | 1-17 | |
| X | US 2012/321012 A1 (ELENES JAVIER [US] ET AL) 20. Dezember 2012 (2012-12-20) * Absatz [0017] – Absatz [0032]; Abbildung 1 * ----- | 1-17 | |
| A | US 2007/002961 A1 (HOCTOR RALPH T [US] ET AL) 4. Januar 2007 (2007-01-04) * Absatz [0044] – Absatz [0059] * ----- | 3 | RECHERCHIERTE SACHGEBIETE (IPC) |
| A | US 2011/200144 A1 (ADLER BERND [DE] ET AL) 18. August 2011 (2011-08-18) * Absatz [0041] – Absatz [0053] * ----- | 11 | H04B |
| A | US 2008/159123 A1 (TEHRANI ARDAVAN M [US] ET AL) 3. Juli 2008 (2008-07-03) * Absatz [0048] * ----- | 11 | |

Der vorliegende Recherchenbericht wurde für alle Patentansprüche erstellt

| Recherchenort | Abschlußdatum der Recherche | Prüfer |
|---|---|---|
| München | 15. September 2023 | Epple, Ulrich |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................
& : Mitglied der gleichen Patentfamilie, übereinstimmendes Dokument

EPO FORM 1503 03.82 (P04C03)

27

**ANHANG ZUM EUROPÄISCHEN RECHERCHENBERICHT
ÜBER DIE EUROPÄISCHE PATENTANMELDUNG NR.**

EP 23 17 1733

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-09-2023

| Im Recherchenbericht angeführtes Patentdokument | Datum der Veröffentlichung | Mitglied(er) der Patentfamilie | Datum der Veröffentlichung |
|---|---|---|---|
| US 2016191138 A1 | 30-06-2016 | CN 105743524 A | 06-07-2016 |
|  |  | EP 3041155 A1 | 06-07-2016 |
|  |  | US 2016191138 A1 | 30-06-2016 |
| DE 102018003106 A1 | 29-08-2019 | CA 3087931 A1 | 06-09-2019 |
|  |  | CN 111699631 A | 22-09-2020 |
|  |  | DE 102018003106 A1 | 29-08-2019 |
|  |  | EP 3759822 A1 | 06-01-2021 |
|  |  | JP 2021515478 A | 17-06-2021 |
|  |  | KR 20200125621 A | 04-11-2020 |
|  |  | US 2020389197 A1 | 10-12-2020 |
|  |  | WO 2019166260 A1 | 06-09-2019 |
| US 2010075611 A1 | 25-03-2010 | EP 2338314 A2 | 29-06-2011 |
|  |  | US 2010075611 A1 | 25-03-2010 |
|  |  | WO 2010036587 A2 | 01-04-2010 |
| US 2012321012 A1 | 20-12-2012 | KEINE | |
| US 2007002961 A1 | 04-01-2007 | DE 102006030409 A1 | 04-01-2007 |
|  |  | US 2007002961 A1 | 04-01-2007 |
| US 2011200144 A1 | 18-08-2011 | CN 102163999 A | 24-08-2011 |
|  |  | DE 102011004259 A1 | 18-08-2011 |
|  |  | US 2011200144 A1 | 18-08-2011 |
| US 2008159123 A1 | 03-07-2008 | CA 2541601 A1 | 21-04-2005 |
|  |  | CN 1864382 A | 15-11-2006 |
|  |  | EP 1678904 A1 | 12-07-2006 |
|  |  | JP 4664920 B2 | 06-04-2011 |
|  |  | JP 2007509520 A | 12-04-2007 |
|  |  | TW I426727 B | 11-02-2014 |
|  |  | US 2005078649 A1 | 14-04-2005 |
|  |  | US 2008159123 A1 | 03-07-2008 |
|  |  | WO 2005036848 A1 | 21-04-2005 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018003106 A1